(19) Europäisches Patentamt
European Patent Office
Office européen des brevets

(11) **EP 4 338 069 B1**

(12) **EUROPEAN PATENT SPECIFICATION**

(45) Date of publication and mention
of the grant of the patent:
**18.02.2026 Bulletin 2026/08**

(21) Application number: **21726735.0**

(22) Date of filing: **11.05.2021**

(51) International Patent Classification (IPC):
*G06F 21/31* (2013.01)          *G06N 20/00* (2019.01)
*G06N 3/0442* (2023.01)

(52) Cooperative Patent Classification (CPC):
**G06F 21/316; G06N 3/044; G06N 3/0442;
G06N 3/09; G06N 20/00**

(86) International application number:
**PCT/SE2021/050444**

(87) International publication number:
**WO 2022/240324 (17.11.2022 Gazette 2022/46)**

(54) **CATEGORIZING A NEW USER IN AN INFORMATION TECHNOLOGY SYSTEM**

KATEGORISIERUNG EINES NEUEN BENUTZERS IN EINEM
INFORMATIONSTECHNOLOGIESYSTEM

CATÉGORISATION D'UN NOUVEL UTILISATEUR DANS UN SYSTÈME DE TECHNOLOGIE
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2024 Bulletin 2024/12**

(73) Proprietor: **Telefonaktiebolaget LM Ericsson
(publ)
164 83 Stockholm (SE)**

(72) Inventors:
• **GHAVIMI, Fayezeh**
  **02200 Espoo (FI)**
• **KJÄLLMAN, Jimmy**
  **02170 Espoo (FI)**
• **MECKLIN, Tomas**
  **10210 Ingå (FI)**

(74) Representative: **Ericsson
Patent Development
Torshamnsgatan 21-23
164 80 Stockholm (SE)**

(56) References cited:
**CN-A- 111 200 607      US-A1- 2018 248 895**

• **SAAUDI AHMED ET AL: "Insider Threats
Detection Using CNN-LSTM Model", 2018
INTERNATIONAL CONFERENCE ON
COMPUTATIONAL SCIENCE AND
COMPUTATIONAL INTELLIGENCE (CSCI), IEEE,
12 December 2018 (2018-12-12), pages 94 - 99,
XP033681939, DOI: 10.1109/
CSCI46756.2018.00025**

## Description

TECHNICAL FIELD

The invention generally relates to the categorizing of users in information technology systems. More particularly, the invention relates to a categorizing device, a method, a computer program and a computer program product for categorizing a new user in an information technology system.

BACKGROUND

Cloud computing is creating a new revolution to information technology systems, such as the fifth generation (5G) and beyond wireless communications networks. Cloud computing includes a lot of benefits such as on-demand resource utilization, resource sharing, storage and computing.

To take full advantage of the cloud benefits, security is one of the major issues that should be carefully taken into account. The security of a cloud can be jeopardized by both external and internal attacks. The external attacks can be reduced by the cloud server's firewall, whereas the internal attacks are more dangerous and either jeopardize an authorized node and attack the cloud system through the authorized node or can be a malicious node who pretends to be a trusted entity, that steals information internally and launches an attack. There is also an assumption that all the abnormally behaving nodes are malicious nodes. An abnormally behaving node can also be a broken node which does not do any transactions.

Machine learning (ML) methods are currently used in cloud applications to identify the internal attacks. One machine learning approach is to use deep neural network and recurrent neural network (RNN) to detect an insider attack in which the neural networks are trained to discover the behaviour of functions executed by the internal users to classify them as a normal or an anomalous user in real-time applications. One architecture that uses this approach is long-short term memory (LSTM) architecture which collects time-series data from the monitored information technology system.

The LSTM architecture functions well for users that have been using the system for a long time and for which there is much data.

However, for a user that is newly added to the system the LSTM architecture functions less well.

It is therefore of interest to obtain an improved categorizing of a new user that is based on the LSTM architecture.

SAAUDI AHMED ET AL: "Insider Threats Detection Using CNN-LSTM Model",IEEE, 12 December 2018 discloses modeling user's behaviors using a deep learning model that consists of CNN and LSTM.

SUMMARY

One object of the invention is to obtain an improved categorizing of a new user that is based on the LSTM architecture.

This object is according to a first aspect achieved by a categorizing device for categorizing a new user in an information technology system. The categorizing device comprises a processor acting on computer instructions whereby the categorizing device is configured to:

obtain user behaviour data of at least one known user of the system, where the at least one known user is a user that is similar to the new user,
provide the user behaviour data of the at least one similar user as comparable user behaviour data to be applied in a cell of a long short-term memory architecture, which cell is provided for the new user, and
obtain a categorization of the new user, which categorization has been made based on the application of the comparable user behaviour data in the cell of the long short-term memory architecture.

The object is according to a second aspect achieved through a method of categorizing a new user in an information technology system. The method is performed in a user categorization device and comprises:

obtaining user behaviour data of at least one known user of the system, where the at least one known user is a user that is similar to the new user,
providing the user behaviour data of the at least one similar user as comparable user behaviour data to be applied in a cell of a long short-term memory architecture, which cell is provided for the new user, and
obtaining a categorization of the new user, which categorization has been made based on the application of the comparable user behaviour data in the cell of the long short-term memory architecture.

The object is according to a third aspect achieved by a computer program for categorizing a new user in an information technology system. The computer program comprises computer program code which when run by a processor of a categorizing device, causes the categorizing device to: obtain user behaviour data of at least one known user of the system, which at least one known user is a user that is similar to the new user,

provide the user behaviour data of the at least one similar user as comparable user behaviour data to be applied in a cell of a long short-term memory architecture, which cell is provided for the new user, and obtain a categorization of the new user, which categorization has been made based on the application of the comparable user behaviour data in the cell of the long short-term memory architecture.

The object is according to a fourth aspect achieved by a computer program product for categorizing a new user in an information technology system, the computer program product comprising a data carrier with the computer program code according to the third aspect.

The cell may be provided by a cell calculation module and the categorizing may be performed by a categorizing module in a cloud environment, which cloud environment may be realized through processing and memory storage resources of a data centre that is external to the information technology system.

The categorizing device, the cell calculation module and the categorizing module may together form an arrangement for categorizing a new user.

The categorization of the new user may be a categorization of the new user as a normal user, as a broken user or as a malicious user.

The at least one known user that is similar to the new user may be a user that has the same quality of service in the information technology system as the new user.

In a first variation of the first aspect, the comparable user behaviour data of the at least one known user is provided for use in a similar user gate layer of the cell and the categorization is based on an output of the similar user gate layer.

In a corresponding variation of the second aspect, the providing of the comparable user behaviour data comprises providing the comparable user behaviour data for use in a similar user gate layer in the cell of the long short-term memory architecture and the categorization is based on an output of the similar user gate layer.

According to another variation of the first aspect, the categorizing device is further configured to obtain personal user behaviour data of the new user and provide this personal user behaviour data for use in the cell, which use comprises using the personal user behaviour data in an input gate layer and a new candidate state layer of the cell and combining an output of the input gate layer with an output of the new candidate state layer and with the output of the similar user gate layer in order to obtain a cell output.

In a corresponding variation of the second aspect, the method further comprises obtaining personal user behaviour data of the new user and providing the personal user behaviour data for use in the cell, which use comprises using the personal user behaviour data in an input gate layer and a new candidate state layer of the cell and combining an output of the input gate layer with an output of the new candidate state layer and with the output of the similar user gate layer in order to obtain a cell output.

The personal user behaviour data may additionally be provided for use in a forget gate layer as well as for use in an output gate layer of the cell.

The similar user gate layer may be a sigmoid gate layer. It is additionally possible that also the input gate layer, forget gate layer and the output gate layers are each a sigmoid gate layer, i.e. a gate layer using a sigmoid function. The new candidate state layer may be a tanh layer, i.e a layer in which a tanh function is used.

The previously described cell output may be a current cell input associated with a current point in time.

In this case it is additionally possible that a previous cell output associated with a previous point in time is supplied to the similar user gate layer, input gate layer, new candidate state gate layer, forget gate layer and/or output gate layer.

It is furthermore possible that an output of the forget gate layer is combined with a previous state of the cell associated with the previous point in time and that the result of this combination is in turned combined with the result of the combination of the outputs of the input gate layer, the new candidate state layer and the similar user gate layer in order to obtain a current state of the cell associated with the current point in time.

It is furthermore possible that the current output of the cell is based on the current state of the cell and the output of the output gate. The current cell output may additionally be a combination of a processed current state and the output of the output gate, which processing may be a tanh processing.

The categorization may be set based on the current output of the cell.

The categorization may additionally be based on a regular trustworthiness indicator of the new user, which regular trustworthiness indicator may be determined based on the cell output and the similar user gate layer output.

The categorization that is based on the regular trustworthiness indicator may additionally be based on a comparison of a current regular trustworthiness indicator with a middle point of clusters of regular trustworthiness indicators, where the current regular trustworthiness indicator is formed based on a current sum of the cell output with a current similar user gate layer output.

The user may in this case be categorized as a normal user if the regular trustworthiness indicator is higher than the middle point and the categorization may be based on the cell output in case the regular trustworthiness indicator is lower than the middle point. For a categorization that is based on the cell output, a positive cell output may represent a normal user, a cell output of zero a broken user and a negative cell output a malicious user.

The categorization may additionally be based on a temporary trustworthiness indicator for the new user, which temporary trustworthiness indicator in turn is based on the output of the similar user gate layer. In this case a positive temporary trustworthiness indicator may represent a normal user, a temporary trustworthiness indicator of zero a broken user and a negative temporary trustworthiness indicator a malicious user.

Both the trustworthiness indicators may additionally depend on transaction history of the user.

It is additionally possible that a categorizing based on the temporary trustworthiness indicator is used in case a time during which the user is monitored is below a threshold defining the time required for the architecture to be trained and that the regular trustworthiness is used when the time is above this threshold.

In one variation of the first aspect, the categorizing device is further configured to perform an activity in the information technology system based on the categorization.

In a corresponding variation of the second aspect, the method further comprises performing an activity in the information technology system based on the categorization.

The invention according to the above-mentioned aspects has a number of advantages. It provides a reliable categorization of the new user in the information technology system.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The invention will now be described in more detail in relation to the enclosed drawings, in which:

Fig. 1 schematically shows an example of an information technology system that comprises various nodes and a categorizing device communicating with a cloud environment comprising a cell calculation module and a categorizing module,

Fig. 2 schematically shows a first realization of the categorizing device,

Fig. 3 shows a block schematic of a second realization of the categorizing device,

Fig. 4 shows a flow chart of a number of steps in a method of categorizing a new user in the information technology system according to a first embodiment, which method steps are performed by the categorizing device,

Fig. 5 shows a flow chart of a number of steps in a method of categorizing a new user in the information technology system according to a second embodiment, which method steps are performed by the categorizing device,

Fig. 6 schematically shows a number of method steps for acting on a user categorization when there is a fault in the information technology system, which method steps are performed by the categorizing device,

Fig. 7 shows a flow chart with a number of method steps performed by the cell calculation module in a cell according to a modified long short-term memory (LSTM) architecture,

Fig. 8 schematically shows the cell according to the modified LSTM architecture,

Fig. 9 shows a flow chart with a number of steps performed by the categorizing module for categorizing a user, and

Fig. 10 shows a computer program product comprising a data carrier with computer program code for realizing the categorizing device implementing the method of categorizing a new user in the information technology system.

DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

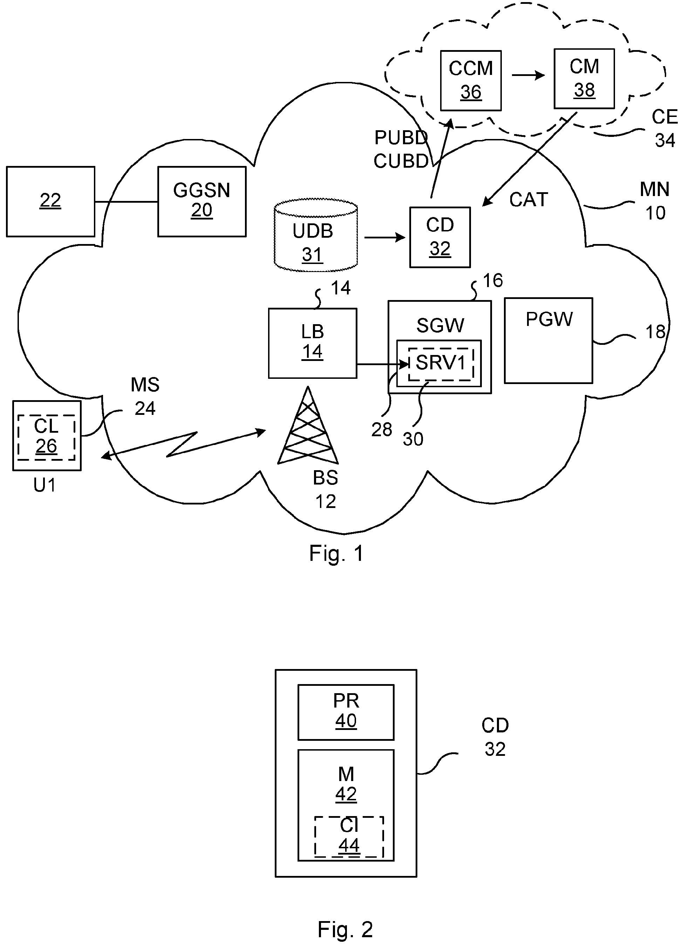

Fig. 1 schematically shows an information technology system, which in the present example is a communication system. Furthermore, the communication system is in this case a mobile communication network MN 10, such as a fifth generation (5G) mobile communication network having a number of users.

It should be realized that the mobile communication network is merely one example of an information technology system in which the aspects of the present disclosure can be implemented.

An information technology system can in fact be any type of system for which computer processing, such as processing in the cloud, is performed for different system users.

The exemplifying mobile communication network 10 comprises a base station BS 12, a load balancer LB 14, a Serving gateway (SGW) 16, a PDN gateway (PGW) 18, where PDN is an acronym for Packet Data Network, and a Gateway GPRS Support Node (GGSN) 20, where GPRS is an acronym for General Packet Radio Service. GGSN 20 is provided in order to allow communication with entities outside of the network 10. The GGSN 20 is shown as being connected to one such external entity 22. There is furthermore a mobile station MS 24 wirelessly communicating with the base station 12. The mobile station 24 more particularly comprises a client CL 26 to be used for such communication.

In the mobile communication network 10 there is also a user database UDB 31 comprising user behaviour data as well as a categorizing device CD 32, which communicates with a cloud environment CE 34, where the cloud environment 34 is provided through equipment of a data centre, such as processing and memory storage resources of such a data centre. The data centre is thus external to the information technology system. In the present example, the cloud environment 34 comprises a cell calculation module 36 and a categorizing module 38 being implemented via such data centre equipment. Moreover, in the present example the categorizing device 32 provides user behaviour data, here exemplified by Personal User Behaviour Data PUBD and Comparable User Behaviour Data CUBD, on which the cell calculation module 36 is to perform processing, the cell calculation module 36 provides the results of the processing to the categorizing module 38 and the categorizing module 38 in turn provides a categorization CAT, to the categorizing device 32, where the categorization CAT is the result of processing the categorizing module 38 has performed on the input it has received from the cell calculation module 36. Examples on this will be given shortly. It is additionally possible that the categorizing device 32 also provides some of the user behaviour data on which the cell calculation module 36 performs processing to the categorising module 38. Alternatively, the categorizing module 38 may obtain this user behaviour data from the cell calculation module 36.

The categorizing device 32, the cell calculation module 34 and the categorizing module 38 may form an arrangement for categorizing a new user. It is additionally possible that also the user database 31 is a part of this arrangement.

Aspects of the disclosure will in the following be described in relation to functionality of the mobile communication network 10 having been moved to the cloud. However, the invention is not limited to being applied for a mobile communication network, but may for instance be applied for any type of information technology system, for instance in the form of a computer network. The mobile communication network is thus merely one example of an information technology system in which aspects of the disclosure may be used. It is additionally possible that the above-described functionality is not moved to the cloud but performed in the information technology system.

The base station 12, which is often termed gNodeB, is furthermore provided in a part of the mobile communication network 10 termed access network or radio access network, while the other devices and nodes are provided in a part of the mobile communication network 10 termed a core network, which in this example may be a so-called 5G core or 5GC.

A user U1 of the mobile communication network 10 is equipped with the mobile station 24, often termed a terminal, via which he or she may communicate with other users and entities via the mobile communication network 10. The user U1 may for instance want to communicate with the external entity 22, for which a communication session may be set up via the base station 12 and core network nodes. As mentioned earlier, the client 26, which may be an application in the mobile station 24, is typically involved in this communication. A session may here be any type of communication session, such as a session involving an application or we browser used to visit a social media site or a media content streaming site or a voice or video communication session, such as a voice or video conferencing session.

The SGW 16 is a node implementing a container 28 for a service SRV1 30, where the service may be a Virtual Network Function (VNF). Although it is not shown in fig. 1 also the PGW 18 may be a node implementing a container comprising a service.

Fig. 2 schematically shows a first realization of the categorizing device 32. It may be provided in the form of a processor PR 40 connected to a program memory M 42. The program memory 42 may comprise a number of computer instructions CI 44 implementing the functionality of the categorizing device 32, and especially for implementing a method of categorizing a new user. The categorizing device 32 thus comprises a processor 40 acting on computer instructions 44 for implementing the functionality of the device, which functionality comprises the method for categorizing a user.

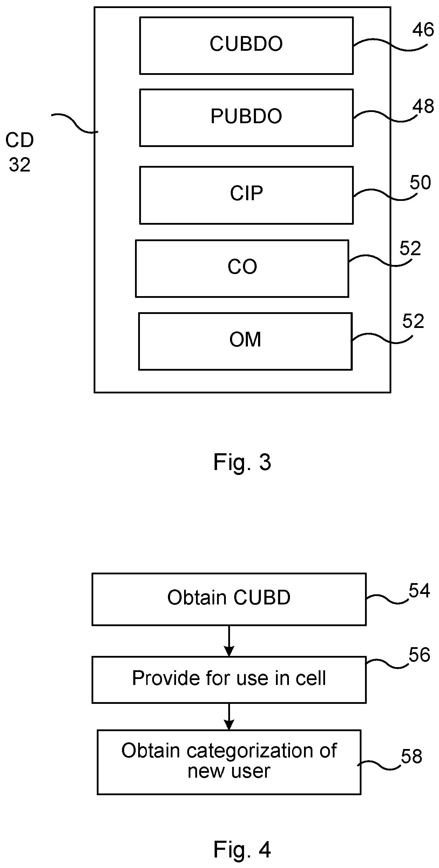

Fig. 3 shows a second realization of the categorizing device 32 comprising a number of blocks. It comprises a Comparable User Behaviour Data Obtainer (CUBDO) 46, a Personal User Behaviour Data Obtainer (PUBDO) 48, a Cell Inputer (CIP) 50, a Categorization Obtainer (CO) 52 and an Operations Monitor (OM) 52. It should here be realized that in some aspects of the present disclosure the operations monitor 52 may be omitted.

The blocks in Fig. 3 may be provided as software blocks, for instance as software blocks in a program memory, or as hardware blocks.

As was mentioned earlier various types of processing is performed for a current session involving the user U1, such as a communication and/or service session involving the mobile station 24 and the external entity 22, as well as for other types of activities in the communication network 10. Such processing may be allocated to the cloud. Moreover, the user U1 is a new user. The user may therefore have been involved in no sessions or just a few sessions before the current session.

In this current session an instance of a service may be instantiated in a network node, such as SGW and PGW, and accessed by the client 26 in the mobile station 24 via the load balancer 14. A service may be realized as a virtualized network function (VNFs) in the container. Fig. 1 schematically shows one such service 30 provided in the container 28 in the SGW node 16.

In a cloud system, one service may be distributed to multiple instances of virtual machines or containers in the cloud. These instances are dynamically created and destroyed based on the sessions. Incoming requests are forwarded to a service instance based on a load balancing decision by the load balancer 14. It is thereby possible to access a cloud service, such as the service 30, using the load balancer 14.

A VNF may additionally communicate with other VNFs and the processing made for a VNF is also typically performed in the cloud. The processing may in fact be performed in the same cloud environment 34 in which the cell calculation module 36 and categorizing module 38 are provided. It should however be realized that the processing of the virtual network functions may be performed in another cloud environment.

The mobile communication network thus provides processing for the new user U1, which processing as an example may be carried out using VNFs in the cloud.

In the mobile communication network 10 there may be several users for which processing in this way is provided.

In recent years, one of the cybersecurity problems is insider threat that has increased attention of cloud security managers and to prevent and detect attack has been turned into a very important issue for them.

Therefore, to take full advantage of the cloud benefits, security is one of the major issues that should be carefully taken into account. The security of a cloud can be jeopardized by both external and internal attacks. The external attacks can be reduced by the cloud server's firewall, whereas the internal attacks are more dangerous and either jeopardize an authorized node and attack the cloud system through the authorized node or can be a malicious node who pretends to be a trusted entity that steals information internally and launches an attack. There is also an assumption that all the abnormally behaving nodes are malicious nodes. An abnormally behaving node can also be a broken node which does not do any transactions.

Because of this there may be a need to identify if a user is a malignant user, i.e. a user that performs some kind of attack on the mobile communication network. Such an attack can in a worst-case scenario make the system more or less inoperable. At the same time, it is important that the identification of if the user is malignant or not is reliable. A wrong categorizing of a user as malignant is also highly undesirable.

Machine learning has recently come of interest to use of such categorization.

Machine learning techniques have high capabilities of detecting faults occurred in the insider attack threat environments. In last years, deep learning and recurrent neural network (RNN) approaches have been used to prevent insider threat attack.

Deep learning approaches are utilized to classify a user as normal or abnormal. To mitigate the internal attacks, the behavioural pattern of a user should be monitored and the user is classified according to that behaviour pattern. Thereby it is possible to accurately identify whether the user is a malicious node, a broken node or a new user. This may be used in order to proactively detect anomalous behaviour and reduce the false alarm rate.

One machine learning architecture that is especially interesting to use for such classification is the Long Short-Term Memory (LSTM) architecture. This provides good results in categorizing users that have been associated with the system a long time.

LSTM is based on time series data, it can therefore employ an LSTM cell to learn a historical experience by given and future knowledge.

Hence, the use of LSTM to identify anomalous behaviour in the cloud processing is of interest. However, the accuracy of LSTM is high when there is enough amount of user behaviour data. When a new user, such as the user U1, joins the network, there is not enough information about user behaviour, thus the accuracy of LSTM prediction would not be high in this situation.

LSTM is thus not very reliable for new users, which is problematic because a malicious user can often be a new user of the information technology system. There is therefore a need for improving on the use of the LSTM architecture for categorizing users of the information technology system with regard to new users. In addition, due to the fact that the vast variety of applications exist in the cloud, the current ML based security systems are typically not good at differentiating whether a misbehaving node is an malicious node, a broken node, or a regular user that is newly joined to the network.

Aspects of this disclosure are directed towards solving these problems.

Therefore, aspects of the present disclosure propose a trustworthiness LSTM (TLSTM) architecture which provides an improvement to the LSTM architecture by adding a new layer that provides additional information about newly joined users. In the TLSTM when the state of the users are unknown, the user transactions may be compared with other similar users and the transaction history of the user may also be analyzed. This new layer can be used to proactively detect attackers with high accuracy.

Aspects of the present disclosure therefore propose a deep learning model that is based on the LSTM architecture and which is able to train itself automatically and accurately, adapt dynamic characteristics of cloud network, and identify the type of users accurately while reducing the false alarm rate significantly.

How this issue is addressed according to a first embodiment will now be described with reference also being made to fig. 4, which shows a number of method steps in a method of categorizing a user being performed in the categorizing device 32.

As can be seen above. there may exist user behaviour data for the users of the system, which data includes data of the behaviour of the users in the information technology system. This may be the number, length and types of sessions a user is involved in and the bandwidth used in such sessions. User behaviour data may also comprise data about resource usage in the cloud environment, such as usage of processing and memory resources. It may also comprise packet loss information and transaction history data, such as data about the number of transactions made by the user in the information technology system for instance the number of file uploads, downloads, and the data transfer rate of the user. This data may be collected for a user when he or she is engaged in a session and then stored in the user database 31. The user database 31 thereby has behaviour data about each user and the longer a user has been associated with the system, the more such data there exists.

Furthermore, the users may be subscribers in the system that have a certain Quality of Service (QoS), where the quality of service is linked to the type of services and the quality of them such as bandwidth and delay, that the user expects. There may typically be a few possible separate QoS that a user can subscribe to.

For a new user in the system, such as the user U1, there may be no or little user behaviour data in the database 31. As mentioned earlier, the users are categorized using the LSTM architecture, which requires a lot of user behaviour data in order to be successful. In order to be able to categorize the new user U1, the comparable user behaviour data obtainer 46 of the categorising device 32 obtains user behaviour data of at least one known user that is similar to a new user, step 54, where a similar user may be another user having the same QoS as the new user U1.

The cell inputer 50 then provides the user behaviour data of this at least one known user as comparable user behaviour data CUBD for application in a cell of a long short-term memory architecture provided for the new user U1, step 56. The cell inputer 50 may for this reason send the comparable user data CUBD to the cell calculation module 36 in order for the cell calculation module 36 to apply the comparable user behaviour data CUBD in a cell of the LSTM architecture, which cell is provided for the new user. The cell calculation module 36 may, after application in the cell, supply an output of the cell to the categorizing module 38, which in turn categorizes the user based on the cell output, which categorization CAT may be a categorization of the user as being a normal user, a broken user or a malicious user. The categorization CAT is then transferred from the categorizing module 38 to the categorizing device 32.

The categorizing obtainer 52 of the categorizing device 32 thereby obtains the categorization CAT of the new user U1 that has been made by the categorizing module 38, step 58, where the categorization CAT thus has been made based on the application of the comparable user behaviour data CUBD in the cell of the long short-term memory architecture.

It is thereby possible to obtain a categorization of the new user U1 and the categorizing device 32 may depending on the type of the categorization perform a number of activities in the system, especially if the user U1 is considered to be a malicious user.

An improved categorization of a new user in the information technology system may therefore be obtained using the LSTM architecture and this categorization can be used to perform an activity in the information technology system, such as to generate an alarm to an operator of the information technology system, to limit the VNFs that a VNF associated with the user is allowed to communicate with or a barring of the user from using the information technology system.

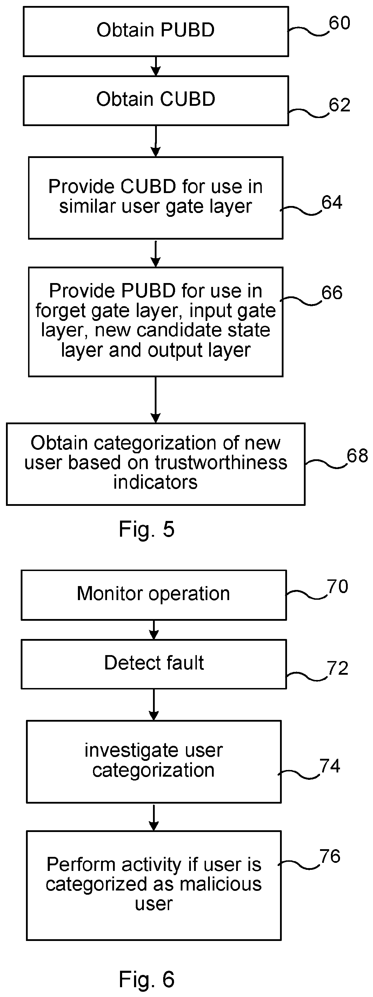

Now a second embodiment will be described with reference being made to fig. 5 and 6, where fig. 5 shows a flow chart of a number of steps performed by the categorizing device 32 in a method of categorizing a new user in the information technology system and fig. 6 schematically shows a number of method steps performed by the categorizing device 32 for acting on the user categorization when there is a fault in the information technology system.

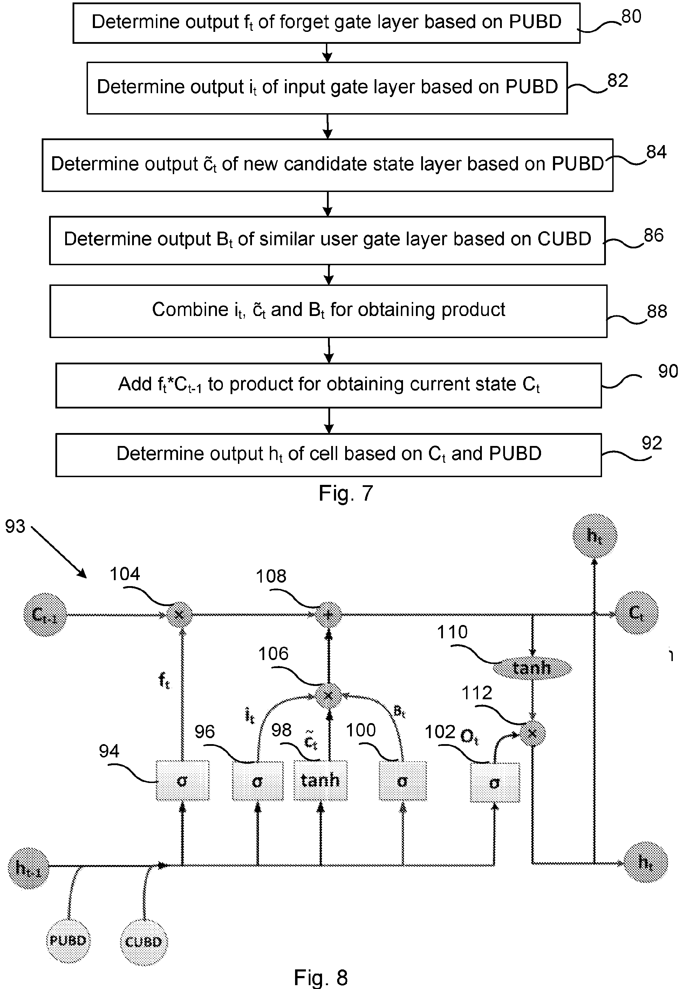

As is known and as can be seen in fig. 8, which schematically shows a modified LSTM architecture, a cell 93 of the LSTM architecture comprises a forget gate layer 94, an input gate layer 96, a new candidate state layer 98 and an output gate layer 102. In aspects of the present disclosure, the LSTM architecture is modified so that it additionally comprises a similar user gate layer 100.

As user behaviour data is collected it is of interest to use this user behaviour data of the users in the obtaining of a categorization of a new user U1.

In this case the personal user behaviour data obtainer 48 of the categorizing device 32 obtains personal user behaviour data PUBD of the new user U1 from the database 31, step 60, and the comparable user behaviour data obtainer 46 obtains comparable user behaviour data CUBD of at least one known user from the database 31, step 62, where a known user is a similar type of user, such as a user having the same QoS as the new user U1. The cell inputer 50 provides the comparable user behaviour data CUBD for application in the cell 93 of the long short-term memory architecture, step 64. The cell inputer 50 also provides the personal user behaviour data PUBD for application in the cell 93, which cell 93 is provided for the new user U1 by the cell calculation module 36. The categorizing device 32 may therefore send the comparable user behaviour data CUBD and the personal user behaviour data PUBD to the cell calculation module 36.

The cell inputer 50 may more particularly provide the comparable user behaviour data CUBD for application in the similar user gate layer 100 of the cell 93 of the LSTM architecture, step 64. The cell inputer 50 may additionally provide the personal user behaviour data PUBD for application or use in the forget gate layer 94 and the input gate layer 96, the new candidate state layer 98 and output gate layer 102 of the cell 93, step 66. In the cell, the output of the input gate layer 96 can then be combined with an output of the new candidate state layer 98 and with an output of the similar user gate layer 100 in order to provide a cell output ht.

The categorization obtainer 52 then obtains a categorization CAT of the new user U1 from the categorizing module 38, which categorization CAT may be based on the output of the similar user gate layer 100. More particularly, the categorizing module 38 may have determined at least one trustworthiness indicator based on the output of the similar user gate layer 100 of the cell 93, such as a regular trustworthiness indicator TI and/or a temporary trustworthiness indicator TTI. The obtaining of the categorization may therefore be the obtaining of a categorization that has been determined based on the at least one trustworthiness indicator, step 68, which may be the temporary trustworthiness indicator TTI and/or the regular trustworthiness indicator TI, where the regular trustworthiness indicator TI may additionally have been determined based on the output ht of the cell.

After having obtained a categorization CAT, which may be a categorization of the user as being a normal user, a broken user or a malicious user, the operations monitor 52 may carry out a safety procedure. In this safety procedure the operations monitor 52 may monitor the operations of the information technology system, step 70, which may involve monitoring the behaviour of the VNFs created for the users. It may then detect a fault in the system, such as an abnormal behaviour of a VNF that has been created for the new user U1, step 72. When a fault has been detected, the operations monitor 52 may then investigate the user categorization CAT, step 74, and then perform an activity if the user U1 is categorized as being malicious, step 76, which in case the VNF of the user is acting abnormally may involve limiting communication with VNFs upstream and/or downstream of the abnormally operating VNF. The activity may additionally or instead involve barring the user U1 from the information technology system and/or generating an alarm to an operator of the information technology system concerning the user U1.

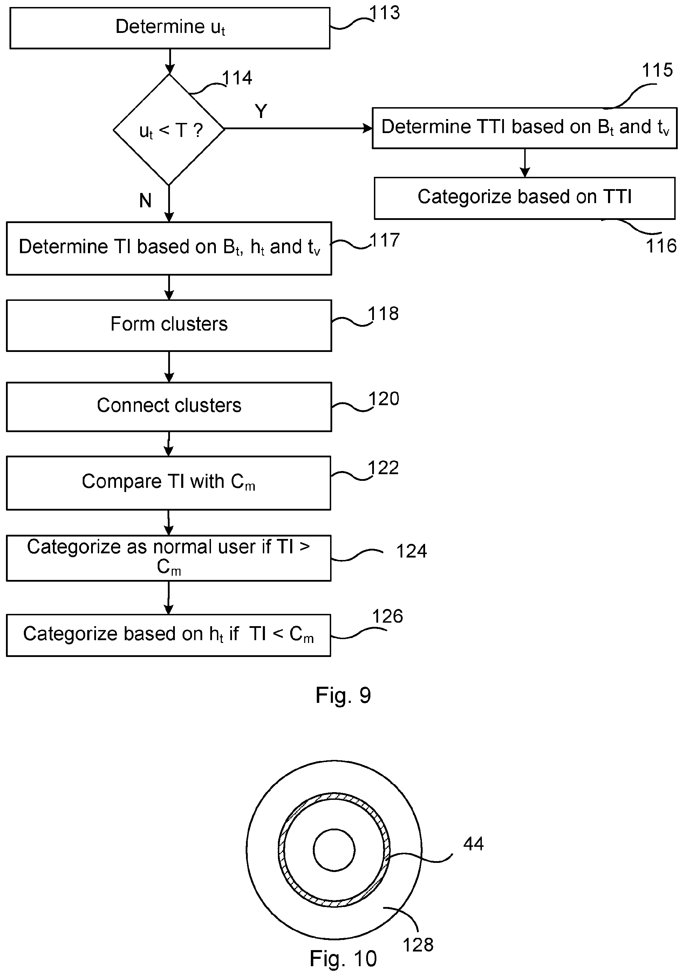

How the cell calculation module 36 may calculate a cell and the categorizing module may categorize a user will now be described with reference being made to fig. 7, 8 and 9, where fig. 7 shows a flow chart with a number of steps performed by the cell calculation module 36 in the modified LSTM architecture and fig. 9 shows a flow chart with a number of steps performed by the categorizing module 38 for classifying the user.

The modified LSTM architecture provides the cell 93 for a user comprising a forget gate layer 94, the input gate layer 96, the new candidate state layer 98 and the similar user gate layer 100. A current state Ct associated with a current point in time t is calculated in the cell 93 and this state Ct is based on an output $h_{t-1}$ of the cell of a previous point in time t-1, the personal user behaviour data PUBD, the comparable user behaviour data CUBD as well as the state $C_{t-1}$ of the previous point in time t-1. Here the forget gate layer 94, input gate layer 96 and the new candidate state layer 98 operate on the personal user behaviour data PUBD and the previous cell output $h_{t-1}$, while the similar user gate layer 100 operates on the comparable user behaviour data CUBD and the previous cell output $h_{t-1}$. Moreover, the current cell state Ct is based on a combination of the previous state $C_{t-1}$, an output ft of the forget gate layer 94, an output it of the input gate later 96, an output $\tilde{c}_t$ of the new candidate state layer 98 and an output Bt of the similar user gate layer 100.

The output $h_{t-1}$ of the cell at the previous point in time t-1 as well as the personal user behaviour data PUBD is also provided to the output gate layer 102. The output of the cell ht associated with the current point in time t is furthermore dependent on the current state Ct and an output Ot of the output gate layer 102.

It can be seen that in order to determine a current output ht and a current state Ct of the cell 93, the cell calculation module 36 determines the output $f_t$ of the forget gate layer 94 based on the personal user behaviour data PUBD, step 80. It also determines the output it of the input gate layer 96 based on the personal user behaviour data PUBD, step 82, as well as determines the output $\tilde{c}_t$ of the new candidate state layer 98 based on the personal user behaviour data PUBD, step 84. Additionally, the cell calculation module 36 determines the output Bt of the similar user gate layer 100 based on the comparable user behaviour data CUBD, step 86. For this reason, the forget gate layer 94, the input gate layer 96 and the similar user gate layer 100 may each employ a sigmoid function, while the new candidate state layer 98 may employ a tanh function.

The outputs it, $\tilde{c}_t$ and $B_t$ of the input gate layer 96, new candidate state layer 98 and similar user gate layer 100 are then combined, where the combination may be a multiplication in a first multiplying point 106 and the result of the combination may then be a first product, step 88.

The output ft of the forget gate layer 94 may additionally be combined with the previous state $C_{t-1}$, where the combination may be a multiplication in a second multiplying point 104, and the result of the combination, which may thus be a second product, may thereafter be combined with the result of the combination of the output it of the input gate layer 96, the output $\tilde{c}_t$ of the new candidate state layer 98 and the output Bt of the similar user gate layer 100. The first product may thus be added to the second product in an adding point 108 and this sum may form the current state $C_t$, step 90.

The output ht of the cell 93 at the current point in time t is then determined based on the current state $C_t$ and the personal user behaviour data PUBD, step 92. The output ht may more particularly be determined based on a combination of a processed current state Ct and an output Ot of the output gate layer 102. The output gate layer 102 may also be a sigmoid gate operating on the previous cell output $h_{t-1}$ and the personal user behaviour data PUBD and the operation on the current state Ct may in this case also be a tanh operation 110, i.e. an application of a tanh function. The combination of the result of the tanh operation 110 on the current state Ct and the output Ot of the output gate layer 102 may be a multiplication in a multiplying point 112. Thereby the output ht of the cell 93 may be the product of the result of the tanh operation 110 on the current state Ct and the output Ot of the output gate layer 102.

Put differently LSTM is a special type of recurrent neural network (RNN) architecture capable of learning order dependencies in sequence prediction. LSTM includes the cell state and has originally three gates, to which according to aspects of the disclosure an additional gate has been added. Gates are a way to keep, add, and remove the cells based on the need of the information. They are composed of sigmoid neural network layers and a pointwise multiplication operation. The sigmoid layer outputs values between zero and one describing how much of each component should be let through. A value of zero means all information should be removed, while a value of one means all information should be kept.

The first sigmoid gate is the forget gate 94 to decide what information is intended to be removed from the cell state. The forget gate layer (ft) in Eq. (1) outputs a value between 0 and 1 for each number in the cell state $C_{t-1}$. If the value is 1, then it indicates that the information is most needed and the cell should be maintained. When the value decreases and reaches 0, it demonstrates that the cell is getting removed.

$$f_t = \sigma(W_f.[h_{t-1}, PUBD_t] + b_f) \tag{1}$$

The next layer is to decide what new information should be kept in the cell state. This layer includes three parts which are as follows. First, the input gate layer 96 decides which values should be updated shown in Eq. 2. Second, the new candidate state layer 98, which is a tanh layer in Eq. 3 creates a vector of new candidate values, $\tilde{c}_i$, that can be added to the state. Third, the output Bt of the similar user gate layer 100 which provides additional information about the comparable cell state utilized in predicting the faults, is calculated using Eq. 4.

Then, these three components are combined to create an update to the state.

$$I_t = \sigma(W_i.[h_{t-1}, PUBD_t] + b_i) \tag{2}$$

$$\tilde{c}_t = \tanh(W_c.[h_{t-1}, PUBD_t] + b_c) \tag{3}$$

$$B_t = \sigma(W_B.[h_{t-1}, CUBD_t] + b_B) \tag{4}$$

To update the old cell state $C_{t-1}$ into the new or current cell state Ct, the old state is multiplied by $f_t$, forgetting the things which are decided to forget earlier. Then, $i_t * \tilde{c}_t * B_t$ is added. This is the new candidate value which is decided to update each state value shown in Eq. 5.

$$C_t = f_t * C_{t-1} + i_t * \tilde{c}_t * B_t \tag{5}$$

Finally, it is needed to decide what value will be an output. The output will be a filtered version of the cell state. First, a sigmoid layer 102 decides what parts of the cell state should be outputted shown in Eq. 6. Then, the cell state goes through tanh 110 and multiplied 112 by the output of the sigmoid gate 102, so that the parts are outputted as shown in Eq. 7.

$$O_t = \sigma(W_o.[h_{t-1}, PUBD_t] + b_o) \tag{6}$$

$$h_t = O_t * \tanh(C_i) \tag{7}$$

It is noted that $W_f$, $W_i$, $W_c$, $W_B$, $W_o$ are the weights of forget gate 94, input gate 96, tanh layer 98, similar user gate 100 and output gate 102, respectively. Furthermore, $b_f$, $b_i$, $b_e$, $b_B$, $b_o$ are the bias of the forget gate 94, input gate 96, tanh layer 98, similar user gate 100 and output gate 102, respectively.

The original LSTM architecture is useful in predicting user behaviour pattern when there is sufficient data. However, the prediction will only be accurate with more data. Indeed, the prediction is not accurate when a new node is added with no information. Thus, to avoid false alarm rate due to lack of information, the new similar user layer $B_i$ is proposed which provides additional information about the comparable cell state which are utilized in predicting the faults. Thereby a modified long short-term memory architecture is proposed, which is here named a trustworthiness long short-term memory (TLSTM) architecture. TLSTM is used to detect anomalous behaviour proactively and increase fault detection accuracy. In TLSTM, when the states of the user are lost, it uses comparable behaviour data to compare the data of the user with the data of other similar users.

A behaviour pattern learning model trains itself with the individual user data in a supervised learning manner where the model is trained by prior data in which it trains itself dynamically with the behaviour of the user in the information technology system. Dynamic behaviour monitoring has insufficient behaviour data threat since the learning process is performed automatically. Therefore, when the user behaviour data is not sufficient for a newly joined user a false alarm may trigger assuming that a malicious activity occurred. Thus, in the proposed framework the model trains itself with both the personal user behaviour data PUBD and comparable user behaviour data CUBD to identify the fault and increase the prediction accuracy when there is not enough data for the newly joined users. As mentioned earlier, to distinguish the newly joined user from a malicious user, TLSTM compares the behaviour of similar users with the newly joined user and their transactions until the necessary personal behaviour data is produced by the new user.

The operation of the categorizing module may in turn be the following. The categorizing module 38 may determine a monitoring time ut, step 113, i.e. a time during which the user is monitored, where the monitoring time ut may be a time that has elapsed since the user became associated with the information technology system. In this case t represents the time instance or time stamp of the monitored time. This monitoring time ut is then compared with a threshold T, which is a threshold defining the time required for the architecture to be trained. The threshold T may thus be the time taken for the architecture to train itself automatically.

In case the monitoring time ut is below the threshold T, step 114, then the categorizing module 38 determines a temporary trustworthiness indicator TTI based on the output Bt of the similar user gate layer 100 and a transaction value $t_v$, step 115, where the transaction value may be calculated based on the number of transactions that are carried out by the user in the information technology system and a transaction may be an upload, a download or a data transfer rate of the user. Thereafter the categorizing module 38 categorizes the user U1 based on the temporary trustworthiness indicator TTI, step 116, where a TTI above zero may represent a normal user, a TTI of zero may represent a broken user and a TTI below zero may represent a malicious user.

In case the monitoring time ut is equal to or above the threshold, step 114, then the categorizing module 38 determines a regular trustworthiness indicator TI based on the output Bt of the similar user gate layer 100, the current cell output ht and the transaction value $t_v$, step 117.

For a current regular trustworthiness indicator where the current regular trustworthiness indicator is formed based on a current sum of the cell output ht with a current similar user gate layer output Bt, and the transaction value $t_v$, the operation may more particularly involve the categorizing module 38 forming clusters of the trustworthiness indicators TI obtained at the different sampling times, step 118, which clustering may be K-means clustering. When the clusters are stable, the categorizing module 38 may then connect the centres or centroids of the clusters, step 120, and determine the middle point $C_m$ between the clusters. Thereafter the categorizing module 38 compares the current regular trustworthiness indicator TI with the middle point $C_m$ between the clusters, step 122. If the current regular trustworthiness indicator TI is higher than the centre point $C_m$ then the user U1 is categorized as a normal user, step 124, while if the regular trustworthiness indicator TI is below the centre point $C_m$ the user is categorized based on the current output ht of the cell, step 126, where a positive value of ht represents a normal user, a zero value a broken user and a negative value a malicious user.

The cluster centre point is an adaptive threshold used in the categorizing of users. Due to the fact that there are diverse applications with different QoS requirements in an information technology system that employs the cloud and some of them have high QoS requirements and may consume more cloud resources while some of them may not need more resources to consume. On the other hand, when an attack occurs in the cloud system it also results in more resources to be consumed. The adaptive threshold has the advantage of differentiating between an authorized user who requires extensive cloud resources from an attack.

Put differently, TLSTM is used to detect user nodes which behave abnormally. An abnormal behaviour in the user nodes occurs due to a malicious insider attack, a broken user node, or a newly joined user. The proposed TLSTM scheme detects the abnormality based on the behaviour pattern of the user node by integrating a trustworthiness indicator or index to the user nodes.

In the proposed scheme, the model trains itself in a way that the behaviour pattern of the users is monitored for time t(ut). The TLSTM scheme as an improvement to the LSTM scheme uses a recurrent approach which compares both the long-term and short-term data to predict the behaviour of the user. The result ht from TLSTM varies from -1 to 1. If the output value is 1, then a user is typically considered as a normal user. When the output value reaches to 0 it can be classified as a broken user or a malicious user. In this case, the recorded transaction history of the user may be considered. The transaction history may be reflected by a transaction value $t_v$. The transaction value $t_v$ may be calculated based on the number of transactions made by the user in the information technology system.

One way to consider the cell output together with the transaction history is to determine a regular trustworthiness index TI for each user. If T is the time taken for the system to train itself automatically then, TI may be calculated as follows.

$$TI = h_t + B_t + t_v \qquad\qquad (8)$$

Clusters may be formed based on TI. K-means clustering may be used and repeated until the centres or centroids of clusters do not change and the algorithm converges. This means that for the TI that is obtained in each time instance, K centroids (for instance K=2) may be selected in random locations. Each data point is then assigned to the cluster which it is closest to, for instance using the Euclidean distance between data points and centroids. The cluster centres are then recalculated as a mean of data points assigned to it. The assigning of data points to clusters and recalculation of cluster centres is then repeated until no further changes occur. Then, after stabilization, the cluster centres are interconnected and the middle point between the cluster centres found and named $C_m$. If the TI of the user is greater than $C_m$ then, the user is considered to be a normal user. If the TI is lower than $C_m$, then the user is categorized based on ht.

When a user joins the network there is not any behaviour data about the new user and cannot acclaim a newly joined user will be a trusted user. To avoid unwanted alert generation for new user, a temporary trustworthiness index (TTI) may be calculated as follows.

$$TTI = B_t + t_v \qquad\qquad (9)$$

If Eq. 9 generates a positive value then, it is considered to be a normal user behaviour and ht is recorded for ut. If the TTI is around "0" then, it is considered as a broken user which does not have any transaction. If the value of TTI is negative, an alarm is triggered indicating a malicious user.

The proposed TLSTM algorithm for categorizing a user may as one example be the following:

Algorithm: Trustworthiness LSTM (TLSTM) algorithm for compromised user prediction

Input: User behavior monitor time $u_t$, TI, and TTI

Output: Compromised user prediction

Procedure: Get_TLSTM ($h_t$, $B_i$)

      Get ($t_v$)

      if $u_t > T$

```
CALCULATE TI
        Start clustering until converges
        Return cluster's center
        Find the middle of clusters' middle and name it as Cm
                if TI > Cm
                        Result = 1 (normal user)
                else if TI < Cm
                        ht -> TLSTM.predict (t)
                                if ht > 0
                                        Result = 1
                                if ht < 0
                                        Result = -1
                                else if ht = 0
                                        Go to BrokenNode
                                end if
                                end if
        BrokenNode
        if ut < T
          Bi →TLSTM.predict (t)
          CALCULATE TTI
          if TTI > 0
                  Result = 1
          if TTI = -1
                  Result = -1
          if TTI = 0
                  Result = 0
          end if
          end if
                end if
        end if
        end if
Return result
end procedure
```

12

TLSTM method detects abnormality in the user behaviour data by integrating a trustworthiness factor to the user nodes. Thus, the proposed TLSTM can identify whether a node is a malicious node, broken node or a regular new user. The proposed framework not only detects the anomalies but also reduces the false alarm rate in the cloud network. Furthermore, the method can identify whether an authorized user can be a malicious insider.

It should here be realized that the categorization may be realized in several different ways than the one described above. It is possible that the categorization is only based on the cell output. Alternatively, the categorization may be based on the temporary trustworthiness indicator and the cell output, where the temporary trustworthiness indicator is used when the LSTM architecture has not been sufficiently trained and the cell output is used when it has. It is additionally possible that there is no investigation of if the LSTM architecture is sufficiently trained, but only the determining of a regular user if the regular trustworthiness indicator is higher than the adaptive threshold formed by the cluster middle point and the use of the cell output for categorization if the regular trustworthiness indicators below it.

The computer program instructions used for implementing the method categorising a new user in the categorizing device may be provided as a computer program that implements the method when being run by the processor of the categorizing device. As an alternative, the computer program may be included in a computer program product for instance as computer program code on a data carrier, such as a CD ROM disc or a memory stick. In this case the data carrier carries a computer program with the computer program code, which will implement the above-mentioned method. One such data carrier 128 with the computer program code 44 is schematically shown in Fig. 10.

In the categorizing device

- the comparable user behaviour data obtainer may be considered to comprise means for obtaining user behaviour data of at least one known user of the system,
- the personal user behaviour data obtainer may be considered to comprise means for obtaining personal user behaviour data of the new user,
- the cell inputer may be considered to comprise means for providing the user behaviour data of the at least one known user as comparable user behaviour data for application in a cell of a long short-term memory architecture provided for the new user as well as to comprise means for providing the personal user behaviour data for application in the cell,
- the categorization obtainer may be seen as comprising means for obtaining a categorization of the new user, and
- the operations monitor may be seen as comprising means for performing an activity in the information technology system based on the categorization.

While aspects of the present disclosure have been described in connection with what is presently considered to be most practical and preferred embodiments, it is to be understood that the disclosure is not to be limited to the disclosed embodiments, but on the contrary, is intended to cover various modifications and equivalent arrangements. Therefore, the disclosure is only to be limited by the following claims.

## Claims

1. A categorizing device (32) for categorizing a new user (U1) in an information technology system (10), the categorizing device (32) comprising a processor (40) acting on computer instructions (44) whereby said categorizing device (32) is operative to:

   obtain user behaviour data of at least one known user of the system, which at least one known user is similar to the new user (U1),
   provide the user behaviour data of the at least one known user as comparable user behaviour data (CUBD) for application in a cell (93) of a long short-term memory architecture provided for the new user (U1), and obtain a categorization (CAT) of the new user (U1), which categorization has been made based on said application of the comparable user behaviour data (CUBD) in the cell (93) of the long short-term memory architecture, wherein the comparable user behaviour data (CUBD) of the at least one known user is provided for application in a similar user gate layer (100) of the cell (93) and the categorization (CAT) is based on an output (Bt) of the similar user gate layer (100), and
   said categorizing device (32) being further operative to obtain personal user behaviour data (PUBD) of the new user (U1) and provide the personal user behaviour data (PUBD) for application in said cell (93), said application comprising applying the personal user behaviour data (PUBD) in an input gate layer (96) and a new candidate state layer (98) of the cell (93) and combining an output ($i_t$) of the input gate layer (96) with an output (Ct) of the new candidate state layer (98) and with the output (Bt) of the similar user gate layer (100) in order to obtain a cell output (ht).

2. The categorizing device (32) according to claim 1, wherein the similar user gate layer (100) is a sigmoid gate layer.

3. The categorizing device (32) according claim 1 or 2, wherein the categorization (CAT) is based on a temporary trustworthiness indicator (TTI) for the new user (U1), which temporary trustworthiness indicator is based on the output (Bt) of the similar user gate layer (100).

4. The categorizing device (32) according to any of claims 1-3, wherein the categorization (CAT) is based on a regular trustworthiness indicator (TI) of the user (U1), which regular trustworthiness indicator (TI) is determined based on the cell output (ht) and the similar user gate layer output (Bt).

5. The categorizing device (32) according to claim 4, wherein the categorization (CAT) that is based on the regular trustworthiness indicator (TI) is based on a comparison of a current regular trustworthiness indicator (TI) with a middle point of clusters ($C_m$) of regular trustworthiness indicators, wherein the current regular trustworthiness indicator (TI) is formed based on a current sum of the cell output (ht) with a current similar user gate layer output (Bt).

6. The categorizing device (32) according to any previous claim, wherein the categorization (CAT) is a categorization of the new user as a normal user, as a broken user or as a malicious user.

7. The categorizing device (32) according to any previous claim, being further operative to perform an activity in the information technology system (10) based on the categorization (CAT).

8. The categorizing device (32) according to any previous claim, wherein said at least one known user that is similar to the new user is a user having the same quality of service in the information technology system (10).

9. A method of categorizing a new user (U1) in an information technology system (10), the method being performed in a user categorization device (32) and comprising:

obtaining (54; 62) user behaviour data of at least one known user of the system that is similar to the new user (U1), providing (56; 64) the user behaviour data of said at least one known user as comparable user behaviour data (CUBD) for application in a cell (93) of a long short-term memory architecture provided for the new user (U1), and obtaining (58, 68) a categorization (CAT) of the new user (U1), which categorization has been made based on said application of the comparable user behaviour data (CUBD) in the cell (93) of the long short-term memory architecture,
wherein the providing of the comparable user behaviour data (CUBD) comprises providing (64) the comparable user behaviour data (CUBD) for application (86) in a similar user gate layer (98) in the cell (93) of the long short-term memory architecture and the categorization (CAT) is based on an output (Bt) of the similar user gate layer (100), and said method further comprising obtaining (60) personal user behaviour data (PUBD) of the new user (U1) and providing (66) the personal user behaviour data (PUBD) for application in said cell (93), said application comprising applying (82, 84) the personal user behaviour data (PUBD) in an input gate layer (96) and a new candidate state layer (98) of the cell (93) and combining (88) an output (it) of the input gate layer (96) with an output (Ct) of the new candidate state layer (98) and with the output (Bt) of the similar user gate layer (100) in order to obtain a cell output (ht).

10. The method according to claim 9, wherein the similar user gate layer (100) is a sigmoid gate layer.

11. The method according to claim 9 or 10, wherein the categorization (CAT) is based on a temporary trustworthiness indicator (TTI) for the new user (U1), which temporary trustworthiness indicator is determined (115) based on the output (Bt) of the similar user gate layer (100).

12. The method according to any of claims 9-11, wherein the categorization (CAT) is based on a regular trustworthiness indicator (TI) of the user (U1), which regular trustworthiness indicator (TI) is determined (117) based on the cell output (ht) and the similar user gate layer output (Bt).

13. The method according claim 12, wherein the categorization (CAT) that is based on the regular trustworthiness indicator (TI) is based on a comparison (122) of a current regular trustworthiness indicator (TI) with a middle point ($C_m$) between clusters of regular trustworthiness indicators, wherein the current regular trustworthiness indicator (TI) is formed (117) based on a current sum of the cell output (ht) with a current similar user gate layer output (Bt).

**14.** The method according to any of claims 9 - 13, further comprising performing (76) an activity in the information technology system (10) based on the categorization (CAT).

**15.** A computer program for categorizing a new user (U1) in an information technology system (10), the computer program comprising computer program code (44) which when run by a processor (40) of a categorizing device (32), causes the categorizing device (32) to:

obtain user behaviour data of at least one known user of the system, which at least one known user is similar to the new user (U1),

provide the user behaviour data of the at least one known user as comparable user behaviour data (CUBD) for application in a cell (93) of a long short-term memory architecture provided for the new user (U1), and

obtain a categorization (CAT) of the new user (U1), which categorization has been made based on said application of the comparable user behaviour data (CUBD) in the cell (93) of the long short-term memory architecture.

**16.** A computer program product for categorizing a new user in an information technology system (10), the computer program product comprising a data carrier (128) with said computer program code (44) according to claim 15.

**Patentansprüche**

**1.** Kategorisierungsvorrichtung (32) zur Kategorisierung eines neuen Benutzers (U1) in einem Informationstechnologiesystem (10), wobei die Kategorisierungsvorrichtung (32) einen Prozessor (40) umfasst, der auf Computeranweisungen (44) einwirkt, wodurch die Kategorisierungsvorrichtung (32) betreibbar ist, um:

Benutzerverhaltensdaten von mindestens einem bekannten Benutzer des Systems zu erhalten, wobei mindestens ein bekannter Benutzer dem neuen Benutzer (U1) ähnlich ist,

die Benutzerverhaltensdaten des mindestens einen bekannten Benutzers als vergleichbare Benutzerverhaltensdaten (CUBD) zur Anwendung in einer Zelle (93) einer für den neuen Benutzer (U1) bereitgestellten LSTM-Architektur bereitzustellen, und eine Kategorisierung (CAT) des neuen Benutzers (U1) zu erhalten, wobei die Kategorisierung basierend auf der Anwendung der vergleichbaren Benutzerverhaltensdaten (CUBD) in der Zelle (93) der LSTM-Architektur hergestellt worden ist, wobei

die vergleichbaren Benutzerverhaltensdaten (CUBD) des mindestens einen bekannten Nutzers zur Anwendung in einer ähnlichen Benutzer-Gate-Schicht (100) der Zelle (93) bereitgestellt werden, und die Kategorisierung (CAT) auf einer Ausgabe (Bt) der ähnlichen Benutzer-Gate-Schicht (100) basiert, und

die Kategorisierungsvorrichtung (32) weiter betreibbar ist, um persönliche Benutzerverhaltensdaten (PUBD) des neuen Benutzers (U1) zu erhalten und die persönlichen Benutzerverhaltensdaten (PUBD) zur Anwendung in der Zelle (93) bereitzustellen, wobei die Anwendung Anwenden der persönlichen Benutzerverhaltensdaten (PUBD) in einer Eingabe-Gate-Schicht (96) und einer neuen Kandidatenzustandsschicht (98) der Zelle (93), und Kombinieren einer Ausgabe (it) der Eingabe-Gate-Schicht (96) mit einer Ausgabe ($C_t$) der neuen Kandidatenzustandsschicht (98) und mit der Ausgabe (Bt) der ähnlichen Benutzer-Gate-Schicht (100) umfasst, um eine Zellenausgabe (ht) zu erhalten.

**2.** Kategorisierungsvorrichtung (32) nach Anspruch 1, wobei die ähnliche Benutzer-Gate-Schicht (100) eine Sigmoid-Gate-Schicht ist.

**3.** Kategorisierungsvorrichtung (32) nach Anspruch 1 oder 2, wobei die Kategorisierung (CAT) auf einem temporären Vertrauenswürdigkeitsindikator (TTI) für den neuen Benutzer (U1) basiert, wobei der temporäre Vertrauenswürdigkeitsindikator auf der Ausgabe (Bt) der ähnlichen Benutzer-Gate-Schicht (100) basiert.

**4.** Kategorisierungsvorrichtung (32) nach einem der Ansprüche 1-3, wobei die Kategorisierung (CAT) auf einem regulären Vertrauenswürdigkeitsindikator (TI) des Benutzers (U1) basiert, wobei der reguläre Vertrauenswürdigkeitsindikator (TI) basierend auf der Zellenausgabe (ht) und der ähnlichen Benutzer-Gate-Schicht-Ausgabe (Bt) bestimmt wird.

**5.** Kategorisierungsvorrichtung (32) nach Anspruch 4, wobei die Kategorisierung (CAT), die auf dem regulären Vertrauenswürdigkeitsindikators (TI) basiert, auf einem Vergleich eines aktuellen regulären Vertrauenswürdigkeitsindikators (TI) mit einem Mittelpunkt von Clustern ($C_m$) regulärer Vertrauenswürdigkeitsindikatoren basiert, wobei der aktuelle reguläre Vertrauenswürdigkeitsindikator (TI) basierend auf einer aktuellen Summe der Zellenausgabe (ht) mit einer aktuellen ähnlichen Benutzer-Gate-Schicht-Ausgabe (Bt) gebildet wird.

6. Kategorisierungsvorrichtung (32) nach einem vorstehenden Anspruch, wobei die Kategorisierung (CAT) eine Kategorisierung des neuen Benutzers als normaler Benutzer, als fehlerhafter Benutzer oder als böswilliger Benutzer ist.

7. Kategorisierungsvorrichtung (32) nach einem vorstehenden Anspruch, die weiter betreibbar ist, um eine Aktivität im Informationstechnologiesystem (10) basierend auf der Kategorisierung (CAT) durchzuführen.

8. Kategorisierungsvorrichtung (32) nach einem vorstehenden Anspruch, wobei der mindestens eine bekannte Benutzer, der dem neuen Benutzer ähnlich ist, ein Benutzer ist, der die gleiche Dienstqualität im Informationstechnologiesystem (10) aufweist.

9. Verfahren zur Kategorisierung eines neuen Benutzers (U1) in einem Informationstechnologiesystem (10), wobei das Verfahren in einer Benutzerkategorisierungsvorrichtung (32) durchgeführt wird und umfasst:

   Erhalten (54; 62) von Benutzerverhaltensdaten von mindestens einem bekannten Benutzer des Systems, der dem neuen Benutzer (U1) ähnlich ist,
   Bereitstellen (56; 64) der Benutzerverhaltensdaten des mindestens einen bekannten Benutzers als vergleichbare Benutzerverhaltensdaten (CUBD) zur Anwendung in einer Zelle (93) einer für den neuen Benutzer (U1) bereitgestellten Long Short-Term Memory-Architektur, und
   Erhalten (58, 68) einer Kategorisierung (CAT) des neuen Benutzers (U1), wobei die Kategorisierung basierend auf der Anwendung der vergleichbaren Benutzerverhaltensdaten (CUBD) in der Zelle (93) der Long Short-Term Memory-Architektur hergestellt worden ist,
   wobei die Bereitstellung der vergleichbaren Benutzerverhaltensdaten (CUBD) Bereitstellen (64) der vergleichbaren Benutzerverhaltensdaten (CUBD) zur Anwendung (86) in einer ähnlichen Benutzer-Gate-Schicht (98) in der Zelle (93) der Long Short-Term Memory-Architektur umfasst und die Kategorisierung (CAT) auf einer Ausgabe (Bt) der ähnlichen Benutzer-Gate-Schicht (100) basiert, und wobei das Verfahren weiter Erhalten (60) persönlicher Benutzerverhaltensdaten (PUBD) des neuen Benutzers (U1) und Bereitstellen (66) der persönlichen Benutzerverhaltensdaten (PUBD) zur Anwendung in der Zelle (93) umfasst, wobei die Anwendung Anwenden (82, 84) der persönlichen Benutzerverhaltensdaten (PUBD) in einer Eingabe-Gate-Schicht (96) und einer neuen Kandidatenzustandsschicht (98) der Zelle (93), und Kombinieren (88) einer Ausgabe (it) der Eingabe-Gate-Schicht (96) mit einer Ausgabe ($C_t$) der neuen Kandidatenzustandsschicht (98) und mit der Ausgabe (Bt) der ähnlichen Benutzer-Gate-Schicht (100) umfasst, um eine Zellenausgabe (ht) zu erhalten.

10. Verfahren nach Anspruch 9, wobei die ähnliche Benutzer-Gate-Schicht (100) eine Sigmoid-Gate-Schicht ist.

11. Verfahren nach Anspruch 9 oder 10, wobei die Kategorisierung (CAT) auf einem temporären Vertrauenswürdigkeitsindikator (TTI) für den neuen Benutzer (U1) basiert, wobei der temporäre Vertrauenswürdigkeitsindikator basierend auf der Ausgabe (Bt) der ähnlichen Benutzer-Gate-Schicht (100) bestimmt (115) wird.

12. Verfahren nach einem der Ansprüche 9-11, wobei die Kategorisierung (CAT) auf einem regulären Vertrauenswürdigkeitsindikator (TI) des Benutzers (U1) basiert, wobei der reguläre Vertrauenswürdigkeitsindikator basierend auf der Zellenausgabe (ht) und der ähnlichen Benutzer-Gate-Schicht-Ausgabe (Bt) bestimmt (117) wird.

13. Verfahren nach Anspruch 12, wobei die Kategorisierung (CAT), die auf dem regulären Vertrauenswürdigkeitsindikators (TI) basiert, auf einem Vergleich (122) eines aktuellen regulären Vertrauenswürdigkeitsindikators (TI) mit einem Mittelpunkt ($C_m$) zwischen Clustern regulärer Vertrauenswürdigkeitsindikatoren basiert, wobei der aktuelle reguläre Vertrauenswürdigkeitsindikator (TI) basierend auf einer aktuellen Summe der Zellenausgabe (ht) mit einer aktuellen ähnlichen Benutzer-Gate-Schicht-Ausgabe (Bt) gebildet (117) wird.

14. Verfahren nach einem der Ansprüche 9 - 13, das weiter Durchführen (76) einer Aktivität im Informationstechnologiesystem (10) basierend auf der Kategorisierung (CAT) umfasst.

15. Computerprogramm zur Kategorisierung eines neuen Benutzers (U1) in einem Informationstechnologiesystem (10), wobei das Computerprogramm einen Computerprogrammcode (44) umfasst, der, wenn er von einem Prozessor (40) einer Kategorisierungsvorrichtung (32) läuft, die Kategorisierungsvorrichtung (32) veranlasst:

Benutzerverhaltensdaten von mindestens einem bekannten Benutzer des Systems zu erhalten, wobei mindestens ein bekannter Benutzer dem neuen Benutzer (U1) ähnlich ist,
die Benutzerverhaltensdaten des mindestens einen bekannten Benutzers als vergleichbare Benutzerverhaltensdaten (CUBD) zur Anwendung in einer Zelle (93) einer für den neuen Benutzer (U1) bereitgestellten LSTM-Architektur bereitzustellen, und eine Kategorisierung (CAT) des neuen Benutzers (U1) zu erhalten, wobei die Kategorisierung basierend auf der Anwendung der vergleichbaren Benutzerverhaltensdaten (CUBD) in der Zelle (93) der LSTM-Architektur hergestellt worden ist.

**16.** Computerprogrammprodukt zur Kategorisierung eines neuen Benutzers in einem Informationstechnologiesystem (10), wobei das Computerprogrammprodukt einen Datenträger (128) mit dem Computerprogrammcode (44) nach Anspruch 15 umfasst.


## Revendications

**1.** Dispositif de catégorisation (32) destiné à catégoriser un nouvel utilisateur (U1) dans un système informatique (10), le dispositif de catégorisation (32) comprenant un processeur (40) agissant sur des instructions informatiques (44) selon lesquelles ledit dispositif de catégorisation (32) est opérationnel pour :

obtenir des données de comportement d'utilisateur d'au moins un utilisateur connu du système, dont au moins un utilisateur connu est similaire au nouvel utilisateur (U1),
fournir les données de comportement d'utilisateur du ou des utilisateurs connus sous forme de données de comportement d'utilisateur comparables (CUBD) pour application dans une cellule (93) d'une architecture de mémoire à court et long terme fournie pour le nouvel utilisateur (U1), et obtenir une catégorisation (CAT) du nouvel utilisateur (U1), la catégorisation ayant été réalisée sur la base de ladite application des données de comportement d'utilisateur comparables (CUBD) dans la cellule (93) de l'architecture de mémoire à court et long terme, dans lequel
les données de comportement d'utilisateur comparables (CUBD) de l'au moins un utilisateur connu sont fournies pour application dans une couche de porte d'utilisateur similaire (100) de la cellule (93) et la catégorisation (CAT) est basée sur une sortie (Bt) de la couche de porte d'utilisateur similaire (100), et
ledit dispositif de catégorisation (32) étant en outre opérationnel pour obtenir des données de comportement d'utilisateur personnelles (PUBD) du nouvel utilisateur (U1) et fournir les données de comportement d'utilisateur personnelles (PUBD) pour application dans ladite cellule (93), ladite application comprenant l'application des données de comportement d'utilisateur personnelles (PUBD) dans une couche de porte d'entrée (96) et une couche d'état de nouveau candidat (98) de la cellule (93) et la combinaison d'une sortie (it) de la couche de porte d'entrée (96) avec une sortie (Ct) de la couche d'état de nouveau candidat (98) et avec la sortie (Bt) de la couche de porte d'utilisateur similaire (100) afin d'obtenir une sortie de cellule (ht).

**2.** Dispositif de catégorisation (32) selon la revendication 1, dans lequel la couche de porte d'utilisateur similaire (100) est une couche de porte sigmoïde.

**3.** Dispositif de catégorisation (32) selon la revendication 1 ou 2, dans lequel la catégorisation (CAT) est basée sur un indicateur de fiabilité temporaire (TTI) pour le nouvel utilisateur (U1), lequel indicateur de fiabilité temporaire est basé sur la sortie (Bt) de la couche de porte d'utilisateur similaire (100).

**4.** Dispositif de catégorisation (32) selon l'une quelconque des revendications 1 à 3, dans lequel la catégorisation (CAT) est basée sur un indicateur de fiabilité régulier (TI) de l'utilisateur (U1), l'indicateur de fiabilité régulier (TI) étant déterminé sur la base de la sortie de cellule (ht) et de la sortie de couche de porte d'utilisateur similaire (Bt).

**5.** Dispositif de catégorisation (32) selon la revendication 4, dans lequel la catégorisation (CAT) basée sur l'indicateur de fiabilité régulier (TI) est basée sur une comparaison d'un indicateur de fiabilité régulier actuel (TI) à un point médian de groupes ($C_m$) d'indicateurs de fiabilité réguliers, dans lequel l'indicateur de fiabilité régulier actuel (TI) est formé sur la base d'une somme actuelle de la sortie de cellule (ht) et d'une sortie actuelle de couche de porte d'utilisateur similaire (Bt).

**6.** Dispositif de catégorisation (32) selon une quelconque revendication précédente, dans lequel la catégorisation (CAT) est une catégorisation du nouvel utilisateur comme utilisateur normal, comme utilisateur défaillant ou comme utilisateur malveillant.

7. Dispositif de catégorisation (32) selon une quelconque revendication précédente, étant en outre opérationnel pour réaliser une activité dans le système informatique (10) sur la base de la catégorisation (CAT).

8. Dispositif de catégorisation (32) selon une quelconque revendication précédente, dans lequel ledit au moins un utilisateur connu similaire au nouvel utilisateur est un utilisateur présentant la même qualité de service dans le système informatique (10).

9. Procédé de catégorisation d'un nouvel utilisateur (U1) dans un système informatique (10), le procédé étant réalisé dans un dispositif de catégorisation d'utilisateur (32) et comprenant :

l'obtention (54 ; 62) de données de comportement d'utilisateur d'au moins un utilisateur connu du système qui est similaire au nouvel utilisateur (U1),
la fourniture (56 ; 64) des données de comportement d'utilisateur dudit au moins un utilisateur connu sous forme de données de comportement d'utilisateur comparables (CUBD) pour application dans une cellule (93) d'une architecture de mémoire à court et long terme fournie pour le nouvel utilisateur (U1), et
l'obtention (58, 68) d'une catégorisation (CAT) du nouvel utilisateur (U1), la catégorisation étant réalisée sur la base de ladite application des données de comportement d'utilisateur comparables (CUBD) dans la cellule (93) de l'architecture de mémoire à court et long terme,
dans lequel la fourniture des données de comportement d'utilisateur comparables (CUBD) comprend la fourniture (64) des données de comportement d'utilisateur comparables (CUBD) pour application (86) dans une couche de porte d'utilisateur similaire (98) de la cellule (93) de l'architecture de mémoire à court et long terme et la catégorisation (CAT) est basée sur une sortie (Bt) de la couche de porte d'utilisateur similaire (100), et ledit procédé comprenant en outre l'obtention (60) de données de comportement d'utilisateur personnelles (PUBD) du nouvel utilisateur (U1) et la fourniture (66) des données de comportement d'utilisateur personnelles (PUBD) pour application dans ladite cellule (93), ladite application comprenant l'application (82, 84) des données de comportement d'utilisateur personnelles (PUBD) dans une couche de porte d'entrée (96) et une couche d'état de nouveau candidat (98) de la cellule (93) et la combinaison (88) d'une sortie (it) de la couche de porte d'entrée (96) avec une sortie (Ct) de la couche d'état de nouveau candidat (98) et avec la sortie (Bt) de la couche de porte d'utilisateur similaire (100) afin d'obtenir une sortie de cellule (ht).

10. Procédé selon la revendication 9, dans lequel la couche de porte d'utilisateur similaire (100) est une couche de porte sigmoïde.

11. Procédé selon la revendication 9 ou 10, dans lequel la catégorisation (CAT) est basée sur un indicateur de fiabilité temporaire (TTI) pour le nouvel utilisateur (U1), l'indicateur de fiabilité temporaire étant déterminé (115) sur la base de la sortie (Bt) de la couche de porte d'utilisateur similaire (100).

12. Procédé selon l'une quelconque des revendications 9-11, dans lequel la catégorisation (CAT) est basée sur un indicateur de fiabilité régulier (TI) de l'utilisateur (U1), l'indicateur de fiabilité régulier (TI) étant déterminé (117) sur la base de la sortie de cellule (ht) et de la sortie de couche de porte d'utilisateur similaire (Bt).

13. Procédé selon la revendication 12, dans lequel la catégorisation (CAT) basée sur l'indicateur de fiabilité régulier (TI) est basée sur une comparaison (122) d'un indicateur de fiabilité régulier actuel (TI) à un point médian ($C_m$) entre des groupes d'indicateurs de fiabilité réguliers, dans lequel l'indicateur de fiabilité régulier actuel (TI) est formé (117) sur la base d'une somme actuelle de la sortie de cellule (ht) et d'une sortie de couche de porte d'utilisateur similaire actuelle (Bt).

14. Procédé selon l'une quelconque des revendications 9-13, comprenant en outre la réalisation (76) d'une activité dans le système informatique (10) sur la base de la catégorisation (CAT).

15. Programme informatique permettant de catégoriser un nouvel utilisateur (U1) dans un système informatique (10), le programme informatique comprenant un code de programme informatique (44) qui, lorsqu'il est exécuté par un processeur (40) d'un dispositif de catégorisation (32), amène le dispositif de catégorisation (32) à :

obtenir des données de comportement d'utilisateur d'au moins un utilisateur connu du système, dont au moins un utilisateur connu est similaire au nouvel utilisateur (U1),
fournir les données de comportement d'utilisateur d'au moins un utilisateur connu en tant que données de comportement d'utilisateur comparables (CUBD) pour application dans une cellule (93) d'une architecture de mémoire à court et long terme fournie pour le nouvel utilisateur (U1), et obtenir une catégorisation (CAT) du nouvel utilisateur (U1), la catégorisation ayant été réalisée sur la base de ladite application des données de comportement d'utilisateur comparables (CUBD) dans la cellule (93) de l'architecture de mémoire à court et long terme.

16. Produit de programme informatique destiné à catégoriser un nouvel utilisateur dans un système informatique (10), le produit de programme informatique comprenant un support de données (128) avec ledit code de programme informatique (44) selon la revendication 15.

Fig. 1

Fig. 2

CD
32

| CUBDO | 46 |
| PUBDO | 48 |
| CIP | 50 |
| CO | 52 |
| OM | 52 |

Fig. 3

| Obtain CUBD | 54 |
| Provide for use in cell | 56 |
| Obtain categorization of new user | 58 |

Fig. 4

| Obtain PUBD | 60 |

| Obtain CUBD | 62 |

| Provide CUBD for use in similar user gate layer | 64 |

| Provide PUBD for use in forget gate layer, input gate layer, new candidate state layer and output layer | 66 |

| Obtain categorization of new user based on trustworthiness indicators | 68 |

Fig. 5

| Monitor operation | 70 |

| Detect fault | 72 |

| investigate user categorization | 74 |

| Perform activity if user is categorized as malicious user | 76 |

Fig. 6

Determine output $f_t$ of forget gate layer based on PUBD — 80

Determine output $i_t$ of input gate layer based on PUBD — 82

Determine output $\tilde{c}_t$ of new candidate state layer based on PUBD — 84

Determine output $B_t$ of similar user gate layer based on CUBD — 86

Combine $i_t$, $\tilde{c}_t$ and $B_t$ for obtaining product — 88

Add $f_t{}^*C_{t-1}$ to product for obtaining current state $C_t$ — 90

Determine output $h_t$ of cell based on $C_t$ and PUBD — 92

Fig. 7

Fig. 8

Determine $u_t$ — 113

$u_t < T$ ? — 114

Y → Determine TTI based on $B_t$ and $t_v$ — 115

Categorize based on TTI — 116

N

Determine TI based on $B_t$, $h_t$ and $t_v$ — 117

Form clusters — 118

Connect clusters — 120

Compare TI with $C_m$ — 122

Categorize as normal user if TI > $C_m$ — 124

Categorize based on $h_t$ if TI < $C_m$ — 126

Fig. 9

44

128

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAAUDI AHMED et al.** Insider Threats Detection Using CNN-LSTM Model. IEEE, 12 December 2018